# EUROPEAN PATENT APPLICATION

(11) **EP 4 306 351 A1**
(43) Date of publication of application: **17.01.2024**
(21) Application number: 22767473.6
(22) Date of filing: 08.03.2022
(51) Int. Cl.: B60L 5/00, B60L 53/38, G06N 3/08, H02J 50/12, H02J 50/40, H02J 7/04

(54) **POWER SUPPLY DEVICE AND SYSTEM FOR WIRELESS CHARGING ELECTRIC ROAD DURING STOPPING AND TRAVELING OF VEHICLE, AND POWER COLLECTION DEVICE USING SAME**

(30) Priority: 08.03.2021 KR 20210030026; 15.07.2021 KR 20210092899
(71) Applicant: Wipowerone.Inc, Daejeon 34051 (KR); Korea Advanced Institute of Science and Technology, Daejeon 34141 (KR)
(72) Inventor: CHO, Dong-Ho, Daejeon 34141 (KR)
(74) Representative: Michalski Hüttermann & Partner Patentanwälte mbB
(86) International application number: PCT/KR2022/003263
(87) International publication number: WO 2022/191577

(57) **Abstract**

The present invention relates to a static and dynamic power supply and pick-up system on an electrified roadway, and more particularly, to a wireless power supply and pick-up systems for buses, trucks, passenger cars, etc. on electrified roads and to a static and dynamic charging electrified roadway power supply and pick-up method for wireless power supply and pick-up systems for transportation systems at airports, ports, campuses, etc.

## Description

### BACKGROUND OF THE INVENTION

### 1. Field of the Invention

The present invention relates to a system for supplying and collecting power while stopping and driving on an electric road, and more particularly, to a power supply equipment and power collecting device of a wireless charging electric road while stopping and driving and a power supply system for the same, for satisfying maximum power and maximum efficiency by making the power supply infrastructure of the electric road insensitive to left and right deviations and up-and-down deviations of an electric vehicle.

### 2. Description of the Related Art

In general, WiTricity, a U.S. company, developed a 3.3kW magnetic resonance type wireless charger and conducted experimental verification by applying it to a vehicle of Toyota Motor Corporation of Japan, and subsequently developed 6.6kW and 11kW magnetic resonance type wireless chargers, and Qualcomm-Halo demonstrated magnetic resonance type wireless charging technology applied to the Spark Renault-01E. In addition, Toyoda and Nissan of Japan have licensed Witricity's wireless charging technology, which uses a circular coil structure, and have been conducting empirical research on Prius plug-in hybrid vehicles since February 2014, and are promoting international standardization (SAE/IEC) through JARI (Japan Automotive Research Institute). In addition, German company Bombardier has developed a wireless charging electric tram, PRIMOVE, and operated a test track in Mannheim, Germany. It is a technology that enables wireless charging while stopping by installing wireless power supply infrastructure at bus stops and parking lots, and can supply up to 100 kW of power wirelessly. In Korea, a magnetic resonance-based online wireless charging technology for electric vehicles has been developed, which charges the batteries of electric buses by delivering 150 kW of power with a transmission efficiency of up to 90% at a distance of 27 cm through a supply coil buried in the road and a pick-up coil mounted on the bus, and enables charging while driving on a supply coil buried in the road in a segmented manner. In Europe, the FABRIC (Feasibility Analysis and Development of On-road Charging Solutions for Future Electric Vehicles) project is underway, and twenty three (23) European organizations (automakers, energy companies, road companies, research institutions, etc.) have formed a consortium to analyze the feasibility of on-road wireless charging technology in the long term and to conduct research and development. Three test sites (France, Italy, and Sweden) are conducting research and measurement of wireless charging technologies with relevant organizations, and Qualcomm has demonstrated wireless charging of passenger vehicles while driving in France. Israel's Electreon is demonstrating wireless charging of buses while driving in Tel Aviv city center, and also demonstrating wireless charging of trucks while driving in Sweden.

As such, although research is being conducted around the world for wireless charging, the cost of building road power supply infrastructure while driving and stopping is high, the structure of the power supply line and the placement of inverters and cap-boxes are not considered, and much research is still needed to improve high-speed charging and maximum efficiency when charging multiple vehicles of various types.

### SUMMARY OF THE INVENTION

In order to solve these problems, according to the present invention, there is provided a power supply equipment of a static and dynamic wireless charging electric road, comprising: an inverter; and a power supply line electrically coupled to the inverter, for wirelessly providing power to a vehicle traveling along a lane, wherein the power supply line includes: a plurality of power supply coils receiving alternating current from the inverter and arranged partially superimposed on each other; and a power supply core installed at the bottom of the plurality of power supply coils.

Preferrable, the power supply lines are plural, a plurality of power supply lines is disposed in each lane, and a power supply coil of a power supply line in one lane and an adjacent power supply coil in an adjacent lane have a same phase of current.

Preferably, the power supply lines are plural, a plurality of power supply lines is disposed in each lane, and the phase of current of a power supply coil of a power supply line in a lane and that of an adjacent power supply coil in an adjacent lane differ by 180 degrees.

Said power supply core may be in a shape of lattice.

The power supply core may be in a shape of discontinuous horizontal bar.

Preferably, the power supply core is in a shape of a fusion of discontinuous horizontal bar and vertical bar continuous at both ends.

The power supply line may include a plurality of cap-boxes for stepping down the voltage applied to the plurality of power supply coils.

According to other aspect of the present invention, there is provided a power supply equipment of a static and dynamic wireless charging electric road, comprising: an inverter; and a power supply line electrically connected to the inverter and including a plurality of segments for wirelessly delivering power to vehicles traveling along a lane; and a common line electrically connected with the inverter and for carrying alternating current power for each of said plurality of segments, wherein each of said plurality of segments includes: a plurality of power supply coils receiving alternating current from the common line and disposed partially superimposed on each other; and a power supply core installed at the bottom of said plurality of power supply coils.

The power supply equipment may further comprise multiple cap-boxes to step down the voltage applied to the common line.

Preferably, said power supply core is in a shape of lattice.

Or preferably, the power supply core is in a shape of discontinuous horizontal bar.

The power supply core may be in a shape of a fusion of discontinuous horizontal bar and vertical bar continuous at both ends.

According to another aspect of the present invention, there is provided a pick-up device for a vehicle travelling on a static and dynamic wireless charging electric road, comprising: a plurality of pick-up coils installed to select an induced voltage above a threshold based on a voltage level; and a pick-up core installed on top of the plurality of pick-up coils.

Preferably, the pick-up coils are in embedded form.

Or preferably, the pick-up coils are in overlapping form.

According to still another aspect of the present invention, there is provided a power supply system of a static and dynamic wireless charging electric road, comprising: two or more inverters; and a common PFC electrically connected with each of the inverters to supply direct current and receive three-phase power.

According to yet another aspect of the present invention, there is provided a method for controlling a power supply equipment of a static and dynamic wireless charging electric road, comprising the steps of: (a) identifying a vehicle entering a power supply line in the power supply equipment; (b) estimating a charging capacity of the vehicle identified in the step (a); and (c) causing a current to flow in at least one of power supply coils of the power supply line such that a power corresponding to the charging capacity of the vehicle estimated in the step (b) could be supplied.

According to yet another aspect of the present invention, there is provided a method comprising the steps of: (a) confirming entry of a vehicle equipped with multiple pick-up units into a power supply line of a power supply equipment; (b) detecting a degree of misalignment in the power supply line entered in the step (a); and (c) causing at least one of a plurality of pick-up coils of the multiple pick-up units to be selected according to the degree of misalignment detected in the step (b).

### [Effect of the invention]

According to the present invention, since the cost of the power supply road, which is composed of the cost of the inverter, the power supply line, the cap-box, the civil work, and the electrical work, has limitation in reducing the cost of the inverter, the civil work, and the electrical work, the cost of power supply lines and cap-boxes is reduced, thereby contributing to the spread of wireless charging infrastructure construction.

In addition, it maximizes convenience by providing high-speed charging services according to the driver's request for various types of multi-vehicle targets, minimizes energy consumption by providing maximum efficiency services, and provides rated receiving capacity and efficiency above the standard value through feedback control when up/down, left/right deviations occur between the power supply equipment and pick-up device and the received power amount is below the standard value, thereby contributing to the spread of wireless charging electric vehicles.

### BRIEF DESCRIPTION OF THE DRAWINGS

FIGS. 1 and 2 depict configurations of a first embodiment of a roadway power supply infrastructure installation including a power supply equipment of a wireless charging electric road while stopping and driving according to the present invention.
FIG. 3 is a configuration diagram detailing a power supply line installed in one lane of a power supply equipment of a wireless charging electric road while stopping and driving according to the present invention.
FIG. 4 shows configurations of a second embodiment of a roadway power supply infrastructure installation including a power supply equipment of a wireless charging electric road while stopping and driving according to the present invention.
FIG. 5 is a diagram illustrating a cap-box utilizing a common line in the second embodiment of the invention according to FIG. 4.
FIG. 6 is a drawing illustrating various power supply core structures for power supply lines according to the present invention.
FIGS. 7 to 8 are drawings illustrating a phase method applied to a lane-specific power supply coil according to the present invention.
FIG. 9 is a drawing illustrating a roadway power supply infrastructure system including a power supply equipment of a wireless charging electric road while stopping and driving according to the present invention.
FIG. 10 is a drawing illustrating a coil structure of an pick-up device using the system and a power supply equipment of a wireless charging electric road while stopping and driving according to the present invention.
FIG. 11 is a flowchart illustrating an algorithm for the power supply infrastructure to autonomously support high-speed, high-efficiency charging in the power supply equipment of a wireless charging electric road while stopping and driving according to the present invention.
FIG. 12 is a flowchart illustrating an algorithm for a pick-up device to autonomously support high-speed, high-efficiency charging in the pick-up device of a wireless charging electric road while stopping and driving according to the present invention.

### DETAILED DESCRIPTION OF THE INVENTION

Hereinafter, exemplary embodiments of the present invention will be described in detail with reference to the accompanying drawings. Prior to the description of the present invention, it will be noted that the terms and wordings used in the specification and the claims should not be construed as general and lexical meanings, but should be construed as the meanings and concepts that agree with the technical spirits of the present invention, based on the principle that the concepts of the terms may be properly defined by the inventor(s) to describe the invention. Since the examples described in the specification and the configurations illustrated in the drawings are merely preferred embodiments of the present invention and cannot represent all the technical sprints of the present invention, it should be understood that various equivalents and modifications that may replace them can be present.

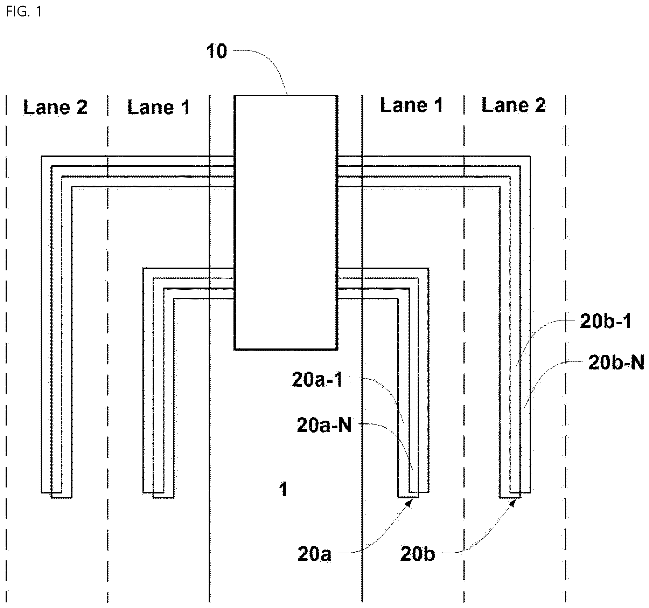

FIGS. 1 to 2 illustrate configuration of a first embodiment of a roadway power supply infrastructure installation including a power supply equipment of a static and dynamic wireless charging electric road according to the present invention.

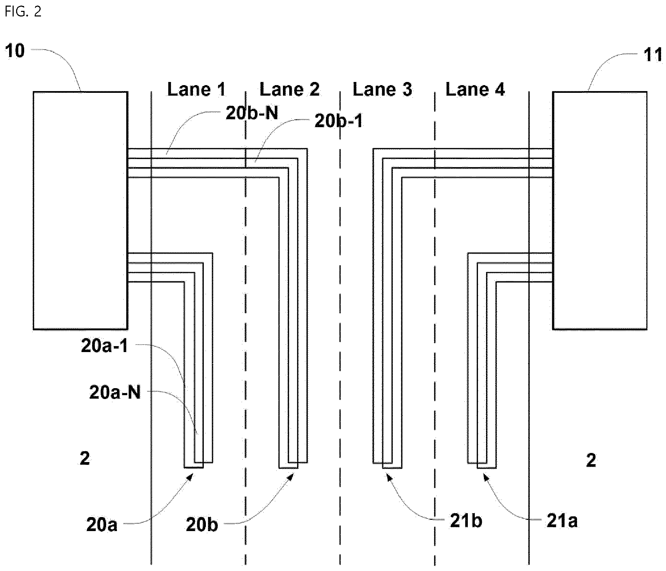

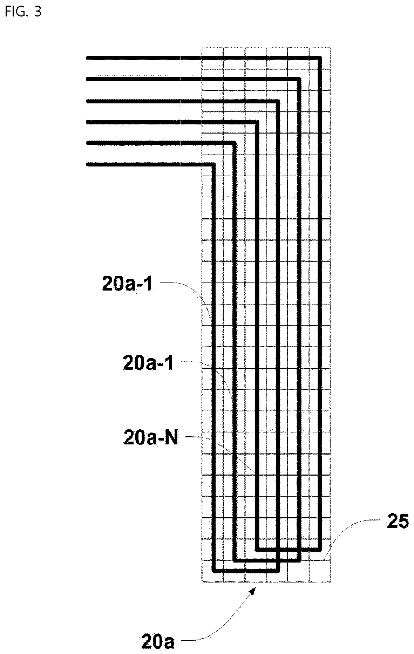

Referring to FIGS. 1 and 2, a roadway power supply infrastructure installation including a power supply equipment of a static and dynamic wireless charging electric road according to the present invention comprises one inverter (10, 11), and power supply lines (20a, 20b, 21a, 21b) for providing power wirelessly to multiple lanes from said one inverter (10, 11), wherein the power supply lines (20a, 20b, 21a, 21b) of each lane include a plurality of supply coils (20a_1, 20a_N), (20b_1, 20b_N). Here, FIG. 1 is a structure of a power supply infrastructure on a road with a median (1), wherein, in the case of a road with a median (1), said one inverter (10) is installed in the center of the road or at the location of the median (1), or is installed semi-underground or underground to support a plurality of power supply lines (20a, 20b) on the upbound or downbound lanes to reduce infrastructure construction costs. And FIG. 2 shows a basic configuration of a power supply infrastructure for a road without a median, in which the inverters (10, 11) are installed on the sidewalk (2). On flat ground, the inverters (10, 11) are installed to be shared, and, on ramps, the power supply lines (20a, 20b, 21a, 21b) are installed only on the uphill side. The inverters (10, 11) apply power to the power supply lines (20a, 20b) of the upbound or downbound multi-lane as needed, and apply necessary power to the power supply lines (20a, 20b, 21a, 21b) of the upbound or downbound multi-lane. Meanwhile, the inverters (10, 11) independently apply power to the power supply lines (20a, 20b, 21a, 21b) of each lane. In addition, it is possible to independently supply power to a plurality of supply coils which consist of the power supply lines (20a, 20b, 21a, 21b) to be described in FIG. 3.

FIG. 3 shows a detailed configuration of a power supply line installed in one lane in static and dynamic wireless charging electric road according to the present invention.

As shown in FIG. 3, the power supply line (20a) of one lane, for example, the one lane shown in FIGS. 1 to 3, includes a plurality of power supply coils (20a_1, 20a_2, 20a_N) to receive alternating current from one inverter 10 based on the center point of the lane, and a power supply core 25 installed at the bottom of the plurality of power supply coils (20a_1, 20a_2, 20a_N). It should be noted that the plurality of power supply coils (20a_1, 20a_2, 20a_N) have the same length as each other. That is, the power supply lines (20a, 20b) of each of the upbound or downbound lanes include a plurality of oval (rectangular) power supply coils (20a_1, 20a_2, 20a_N) having an appropriate length, and a lattice-type core structure (25) installed under the power supply coils (20a_1, 20a_2, 20a_N). Such a power supply line 20a has the effect of increasing robustness to the vehicle's deviations to left and right, up and down, or diagonal. In particular, the power supply line (20a) installs a plurality of power supply coils (20a_1, 20a_2, 20a_N) partially overlapping in each lane based on the center point of each lane so that wireless charging can be performed smoothly even when a bus, a large truck, a small truck, a passenger car, etc. are driving on the road or while stopped, and the spacing of each coil are optimally determined. Furthermore, the width of the individual power supply coils (20a_1, 20a_2, 20a_N) is smaller than the car width of the smallest passenger car to avoid EMF problems.

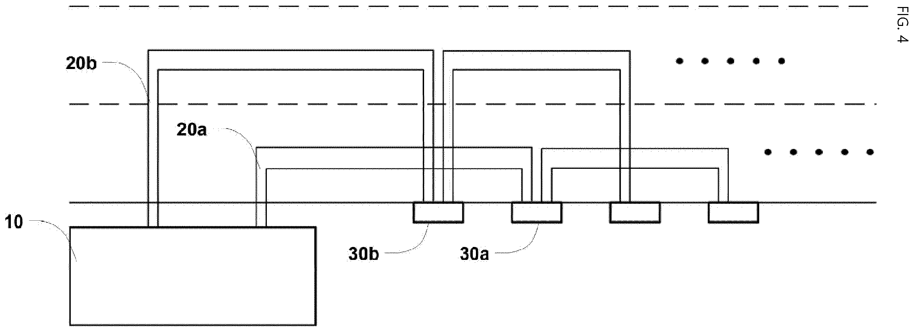

FIG. 4 illustrates configuration of a second embodiment of a roadway power supply infrastructure installation including a power supply equipment of a static and dynamic wireless charging electric road according to the present invention.

Referring to FIG. 4, it includes an inverter (10), power supply lines (20a, 20b) for providing power wirelessly to a plurality of lanes from the inverter (10), and a plurality of cap-boxes (30a, 30b) for allowing the power supply lines (20a, 20b) to extend, thereby reducing the voltage supplied to the extended power supply lines (20, 20b). It should be noted that the power supply lines for each lane in FIG. 4 also comprise of a plurality of power supply coils as shown in FIG. 3.

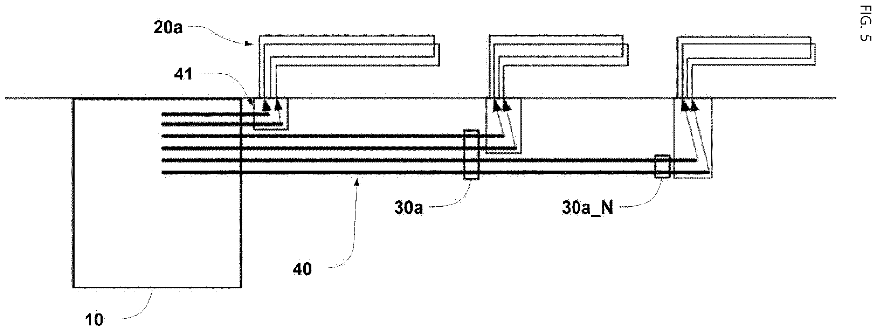

FIG. 5 is a drawing illustrating a cap-box utilizing a common line in the second embodiment of the present invention according to FIG. 4.

Referring now to FIG. 5, there is shown one inverter (10) and a common line (40) connected to this one inverter (10) to deliver alternating current power to a power supply line (20a). While the previously described power supply line (20a) provides power wirelessly from the inverter to the plurality of lanes, in the second embodiment, power is provided from the one inverter (10) to the power supply line (20a) provided in the plurality of lanes via the common line (40) connected to this inverter (10). This common line (40) is a power line necessary for extending the power supply line (20a), and the common line (40) is generally utilized when configuring the power supply line (20a) in segments. And a pair of common lines (40) is required for each segment, and a switch (41) is required for each pair of common lines (40). The main feature of the present invention is that, when delivering current to the common line (40) through the inverter (10), a plurality of cap-boxes (30a, ..., 30a_N) are provided to reduce the voltage applied to the common line (40) when the common line (40) is elongated. In FIG. 5, the switch (41) is shown on only one coil of the plurality of power supply coils (see FIG. 3) of the power supply line (20a), but it is to be understood that each power supply coil is provided with a switch. On the other hand, FIG. 5 illustrates a plurality of power supply lines comprising a plurality of segments for wirelessly supplying power in one lane, but the same is true for a plurality of lanes. That is, the inverter (10) identifies an upbound or downbound electric road based on GPS-based vehicle location information and vehicle speed, and after identifying the lane, applies power to the segment just before the wireless charging vehicle enters the segment to minimize standby power consumption, and determines the starting point of the segment for each lane by considering the shortest path. Here, the cap-boxes (30a, 30a_N) can be installed on the median or sidewalk closest to the segment to minimize standby power loss and maximize the length of the segment extension. At this time, the corresponding segment power of the inverter (10) is controlled just before the vehicle enters the segment using the vehicle location and identification information and the vehicle speed based on the camera installed on the median or sidewalk or the shoulder or road, or the corresponding segment power of the inverter is controlled based on the GPS-based vehicle location information and the vehicle speed information. In other words, FIG. 4 shows a configuration of a power supply infrastructure configuration in which the length of the power supply lines (20a, 20b) is extended using the cap-boxes (30a, 30b) comprising the capacitors, and cost for building a wireless power supply infrastructure can be reduced by extending the length of the segment that can be charged by one inverter (10) using the cap-boxes (30a, 30b) on the power supply lines (20a, 20b). The power supply lines (20a, 20b), which are composed of a power supply coil and a core, as will be described below, are constructed in parallel during road construction when constructing a new road, but when constructing on an existing road, the power supply line segments (20a, 20b) can be precast in advance to reduce the construction time of the electric road.

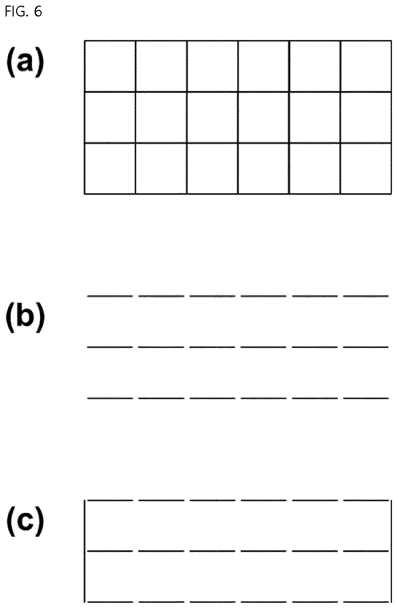

FIG. 6 is a drawing illustrating various power supply core structures of a power supply line according to the present invention, wherein the power supply core of the present invention is installed on the entire power supply line regardless of the coil structure of the segment to eliminate charging blind spots in the power supply line. The power supply core (25) of FIG. 5 described above is a lattice-type core structure, as shown in (a) of FIG. 6. The lattice-type core structure according to (a) of FIG. 6 can improve charging toughness even when deviations occur during driving. And (b) of FIG. 6 is a discontinuous horizontal bar type core structure to reduce the cost of a conventional continuous horizontal bar structure, and (c) of FIG. 6 is a fusion of a discontinuous horizontal bar type and a vertical bar type to reduce the core cost while slightly improving the side-to-side deviation.

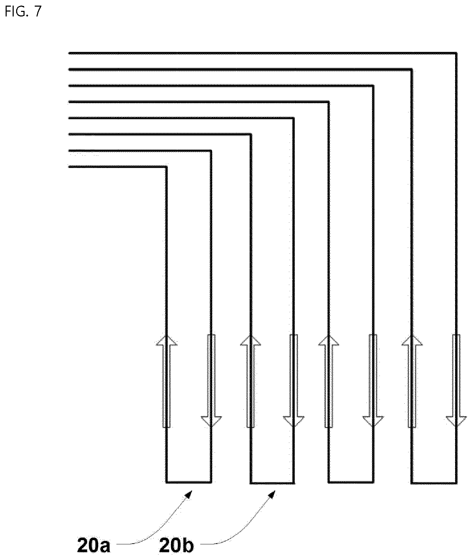

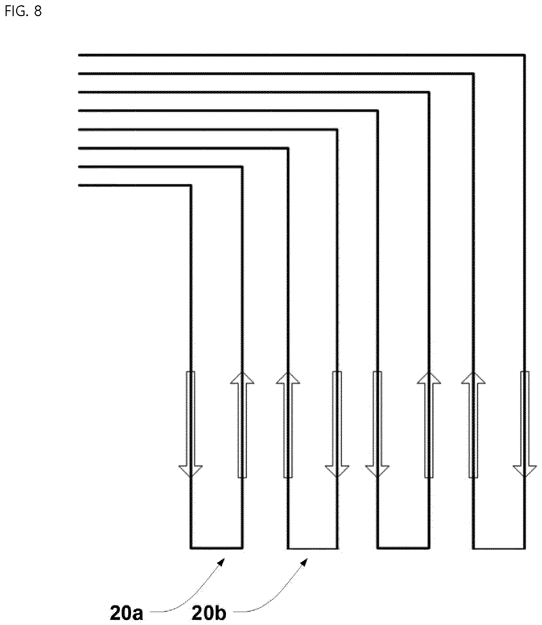

FIGS. 7 and 8 are drawings illustrating a phase method applied to a power supply coil of a lane-by-lane power supply line according to the present invention.

In FIG. 7, the power supply coil is configured to apply in-phase currents, and the power supply coil maintains the same phase of current application for each different lane to reduce EMI and EMF generation in the lane boundary area. In FIG. 8, the power supply coil is configured to apply opposite phase currents, and the current phase of the power supply coil is applied with 180 degrees difference for each different lane, enabling robust charging in the lane boundary area. At this time, a lattice-type core is installed under the power supply coil so that the magnetic field is directed over the power supply line instead of under the power supply line, and a low-cost lattice-type core can be used to improve the performance in case of deviation.

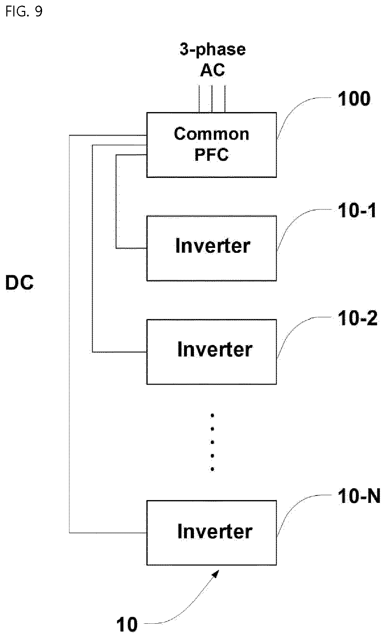

FIG. 9 illustrates a configuration of a roadway power supply infrastructure system including a power supply equipment for static and dynamic wireless charging electric road according to the present invention, which is a decentralized power supply infrastructure system. One common PFC (100) and a plurality of inverters (10a, 10b, ..., 10N) are connected in parallel to receive direct current, which has the effect of reducing the cost of electricity.

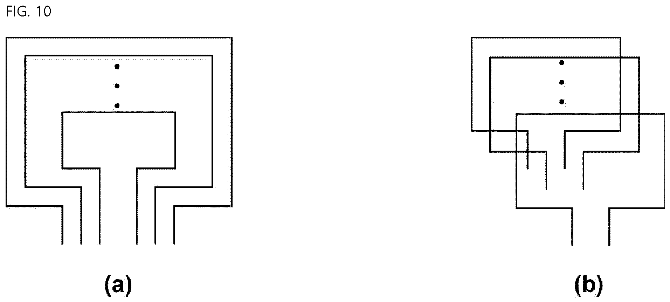

FIG. 10 illustrates a coil structure of a pick-up device using a power supply equipment and a system for the static and dynamic wireless charging electric road according to the present invention. A pick-up device is a device that receives power from a power supply equipment of a static and dynamic wireless charging electric road, and is provided on various vehicles. In this case, the pick-up device is composed of a pick-up coil and a core. In the coil of the pick-up device, a plurality of pick-up coils are installed so that an induced voltage above a reference value is selected according to the voltage level of the power supply equipment, and a pick-up core is installed on top of the plurality of pick-up coils. The coils can be configured in various shapes so that an induced voltage above a reference value is selected according to the voltage level of the power supply equipment, such as square, rectangular, oval, and circular, as shown in (a) of FIG. 10, in which multiple layers of coils of different sizes surround the outer perimeter of the smallest inner coil, or as shown in (b) of FIG. 10, in which multiple coils of the same size are positioned differently so that they overlap only partially. In other words, the received power can be adjusted by adjusting the number of plural coils of an oval or rectangular pick-up to match the required received power in a aligned position, and the number of pick-up coils to be used can also be adjusted so that the desired received power can be obtained even in the event of deviations to the left, right, diagonal, up and down. In addition, the pick-up coil structure is configured with multiple coils in an embedded form (a) or an overlapping form (b) to withstand deviations during driving, and then, according to the voltage level induced in the coils, we select a number of coils above the threshold induced voltage to generate wireless charging power and charge the battery. At this time, the unit pick-up coil structure can have a square, rectangular, oval, and circular structure, and multiple pick-up devices can be mounted in front and back according to the vehicle. The pick-up device can be attached to any available underfloor space of the vehicle to enable robust charging while driving. Meanwhile, the pick-up core can use a lattice-type core, such as the power supply core described earlier, to enable robust wireless charging while reducing cost, a discontinuous horizontal bar core structure to reduce core cost, or a fused core structure to improve side-to-side deviation and reduce cost.

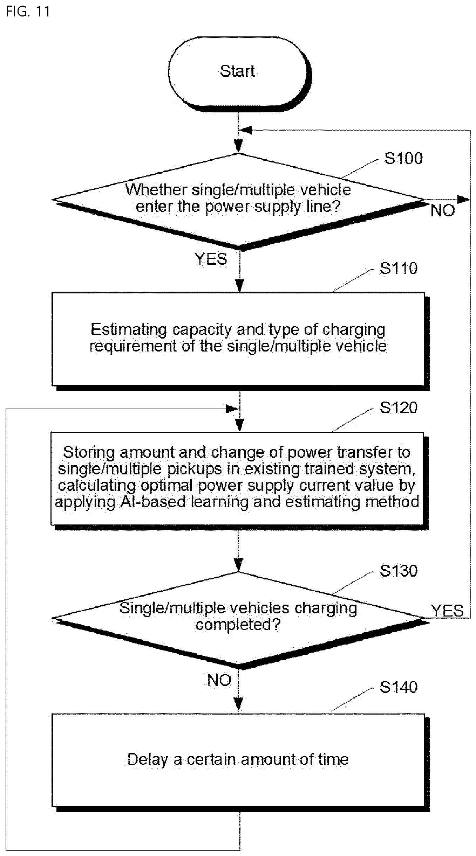

FIG. 11 is a flowchart of an algorithm for calculating an optimal current value of a single/multiple vehicle's high-speed, high-efficiency, high-strength in a static and dynamic wireless charging electric road according to the present invention and controlling the power supply equipment.

First, as shown in FIG. 11, it is determined whether a single/multiple vehicle enters the power supply line of the power supply equipment of the present invention (S100), that is, it is determined whether a single/multiple vehicle enters the power supply equipment of the present invention described in FIGS. 1 to 3 above, wherein a single/multiple vehicle may be a single/multiple vehicle equipped with a pick-up device of the present invention or a single/multiple vehicle equipped with a conventional pick-up device.

Based on the determination (S100) result, if a single/multiple vehicle enters a power supply line according to the present invention, the capacity and type of charging requirement of the single/multiple vehicle is estimated (S110).

Then, storing the amount and change of power transfer to the single/multiple pick-up devices in the existing trained system, and applying the AI learning and estimation technique to calculate the optimal power supply current value (S120), the power supply current is controlled to be provided to at least one of the plurality of power supply coils of the power supply line of the present invention so that the power corresponding to the charging capacity and type of the single/multiple vehicles estimated in step S110 could be transferred. In this case, a multi class cross entropy loss, a sparse multi class cross entropy loss, or a Kullback Leibler divergence loss is used as the loss function. Afterward, it is determined whether the single/multiple vehicle charging is completed (S130) by controlling the inverter that provides the optimal supply current value calculated in step S120, and if the charging is not completed, in the previously learned system, the power transfer amount and the change amount to the single/multiple pick-up device are saved again after a certain period of time (S140), and the optimal supply current value is calculated by applying the AI learning and estimation method (S120). Again, the loss function may be multi class cross entropy loss, sparse multi class cross entropy loss, or Kullback Leibler divergence loss.

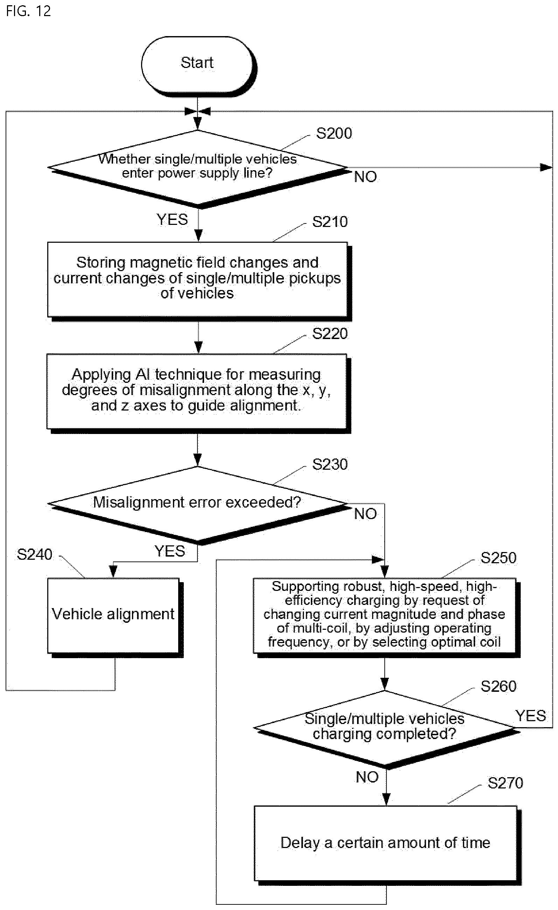

FIG. 12 is a flowchart illustrating a method of high-speed, high-efficiency, high-intensity autonomous intelligent charging of single/multiple vehicles at a static and dynamic wireless charging electric road pick-up device according to the present invention, in which it is determined whether a wireless charging vehicle having a single/multiple pick-up devices enter on a power supply line, a power supply equipment of the present invention (S200).

Based on the determination result (S200), if the single/multiple wireless charging vehicle enters the power supply line of the present invention, the magnetic field measurement value change, current measurement value change, and battery charging speed value change in the circular or multi-coil of the single/multiple pick-up devices are stored (S210).

Then, based on the stored values, AI learning and estimation techniques such as SVM and RNN are applied to the basic trained system to measure the degree of misalignment in the x-axis, y-axis, and z-axis directions of the entering vehicle to guide alignment (S220) . The loss function is multi class cross entropy loss, sparse multi class cross entropy loss or Kullback Leibler divergence loss.

Then, excessiveness of the misalignment error is determined (S230) and, if excessive, we make the wireless charging vehicle to drive over the supply line to realign the pick-up device and power supply line (S240).

On the other hand, if it is not excessive, the system requests a change in the current magnitude and phase of the multi-coils of the supply line, requests an adjustment of the operating frequency, or selects the optimal receiving coils to support robust, high-speed, high-efficiency charging (S250). That is, at least one of the plurality of pick-up coils of the single/multiple pick-up devices provided in the vehicle is selected. Then, it is determined whether the single/multiple vehicle charging is completed (S260), and if not, the single/multiple vehicle charging is continued (S250) after a period of time (S270) to support high-intensity, high-speed, high-efficiency charging.

Thus, the single/multiple pick-ups can support high-speed and high-efficiency charging by requesting a change in the current magnitude and phase of the multi-coil, requesting an adjustment of the operating frequency, or selecting the optimal receiving coil to enable robust charging even in a non-aligned situation.

As described above, although the present invention has been illustrated by limited embodiments and drawings, the invention is not limited thereby, and various modifications and variations can be made by one having ordinary knowledge in the technical field to which the invention belongs, within the equitable scope of the technical idea of the invention and the claims of the patent which will be described below.

## Claims

1. A power supply equipment of a static and dynamic wireless charging electric road, comprising:
an inverter; and
a power supply line electrically coupled to the inverter, for wirelessly providing power to a vehicle traveling along a lane,
wherein the power supply line includes:
a plurality of power supply coils receiving alternating current from the inverter and arranged partially superimposed on each other; and
a power supply core installed at the bottom of the plurality of power supply coils.

2. The power supply equipment of claim 1,
wherein the power supply lines are plural,
wherein a plurality of power supply lines is disposed in each lane, and
wherein a power supply coil of a power supply line in one lane and an adjacent power supply coil in an adjacent lane have a same phase of current.

3. The power supply equipment of claim 1,
wherein the power supply lines are plural,
wherein a plurality of power supply lines is disposed in each lane, and
wherein the phase of current of a power supply coil of a power supply line in a lane and that of an adjacent power supply coil in an adjacent lane differ by 180 degrees.

4. The power supply equipment of claim 1, wherein said power supply core is in a shape of lattice.

5. The power supply equipment of claim 1, wherein the power supply core is in a shape of discontinuous horizontal bar.

6. The power supply equipment of claim 1, wherein the power supply core is in a shape of a fusion of discontinuous horizontal bar and vertical bar continuous at both ends.

7. The power supply equipment of claim 1, wherein the power supply line includes a plurality of cap-boxes for stepping down the voltage applied to the plurality of power supply coils.

8. A power supply equipment of a static and dynamic wireless charging electric road, comprising:
an inverter; and
a power supply line electrically connected to the inverter and including a plurality of segments for wirelessly delivering power to vehicles traveling along a lane; and
a common line electrically connected with the inverter and for carrying alternating current power for each of said plurality of segments,
wherein each of said plurality of segments includes:
a plurality of power supply coils receiving alternating current from the common line and disposed partially superimposed on each other; and
a power supply core installed at the bottom of said plurality of power supply coils.

9. The power supply equipment of claim 8,
further comprising multiple cap-boxes to step down the voltage applied to the common line.

10. The power supply equipment of claim 8, wherein said power supply core is in a shape of lattice.

11. The power supply equipment of claim 8, wherein the power supply core is in a shape of discontinuous horizontal bar.

12. The power supply equipment of claim 8, wherein the power supply core is in a shape of a fusion of discontinuous horizontal bar and vertical bar continuous at both ends.

13. A pick-up device for a vehicle travelling on a static and dynamic wireless charging electric road, comprising:
a plurality of pick-up coils installed to select an induced voltage above a threshold based on a voltage level; and
a pick-up core installed on top of the plurality of pick-up coils.

14. The pick-up device of claim 13, wherein the pick-up coils are in embedded form.

15. The pick-up device of claim 13, wherein the pick-up coils are in overlapping form.

16. A power supply system of a static and dynamic wireless charging electric road, comprising:
two or more inverters as referred in claim 1 or claim 8; and
a common PFC electrically connected with each of the inverters to supply direct current and receive three-phase power.

17. A method for controlling a power supply equipment of a static and dynamic wireless charging electric road, comprising the steps of:
(a) identifying a vehicle entering a power supply line in the power supply equipment;
(b) estimating a charging capacity of the vehicle identified in the step (a); and
(c) causing a current to flow in at least one of power supply coils of the power supply line such that a power corresponding to the charging capacity of the vehicle estimated in the step (b) could be supplied.

18. A method comprising the steps of:
(a) confirming entry of a vehicle equipped with multiple pick-up units into a power supply line of a power supply equipment;
(b) detecting a degree of misalignment in the power supply line entered in the step (a); and
(c) causing at least one of a plurality of pick-up coils of the multiple pick-up units to be selected according to the degree of misalignment detected in the step (b).
